Europäisches Patentamt

European Patent Office

Office européen des brevets

(11) Publication number: **0 217 493**
**A1**

# EUROPEAN PATENT APPLICATION

(21) Application number: 86305260.1

(51) Int. Cl.4: **F01N 3/28**

(22) Date of filing: 08.07.86

(30) Priority: 03.09.85 US 771777

(43) Date of publication of application:
08.04.87 Bulletin 87/15

(84) Designated Contracting States:
DE FR GB IT

(71) Applicant: GENERAL MOTORS CORPORATION
General Motors Building 3044 West Grand
Boulevard
Detroit Michigan 48202(US)

(72) Inventor: Jalbing, John Ingmar
8517 Arbella Road
Millington Michigan 48746(US)
Inventor: Carriere, Richard Thomas
7050 Pierson Road
Davison Michigan 48423(US)

(74) Representative: Haines, Arthur Donald et al
Patent Section (F6) Vauxhall Motors Limited
P.O. Box 3 Kimpton Road
Luton, Beds. LU2 0SY(GB)

(54) Catalytic converter substrate.

(57) There is disclosed a catalytic converter substrate
(22) formed of folded foil strips prevented from
lengthwise movement relative to one another by
retaining means (58) engaging opposing ends of the
folds (42,44,50) of said strips, the substrate (22)
being formed from two plain foil strips (36,38) and
one corrugated foil strip (40) arranged and folded
together so that each plain foil strip (36,38) is formed
into a folded structure comprising a series of juxtaposed rectangular units, each having a substantially U-shaped cross-section, the folded structures
formed from the two plain strips (36,38) are interleaved with one another, and the corrugated strip
(40) is folded backwards and forwards alternately to
lie between and to separate the interleaved folded
structures from one another, so as to define passages (54) between the corrugated strip (40) and the
plain strips (36,38).

Fig. 1

Fig. 4

## CATALYTIC CONVERTER SUBSTRATE

### Technical Field

This invention relates to catalytic converters and more particularly to those with a catalyst-coated metal substrate formed of smooth and corrugated foil strips.

### Background of the Invention

In the manufacture of catalytic converters used to eliminate the undesirable constituents in combustion engine exhaust gases, it is currently common practice as an alternative to beds of ceramic beads to employ a ceramic monolith substrate that is coated with a catalyst and is contained in a sheet metal housing through which the exhaust gases are directed. The ceramic monolith is both frangible and has a much lower coefficient of expansion than the sheet metal forming the housing, and as a result, an arrangement is required that will both support and maintain sealed integrity of the ceramic monolith without fracture thereof in the harsh vibratory and temperature environment of the engine exhaust system. Moreover, the ceramic monolith is normally formed by extrusion through a die and as a result a new die is required for every cross-sectional change in the monolith.

Honeycomb substrates formed of foil strips have been proposed in avoidance of such problems; however, they are typically deficient in some respect and/or present their own problems from a manufacturing and/or functional standpoint. For example, it is known to form the honeycomb substrate by spirally winding together strips of smooth and corrugated foil but there results the problem of relative telescoping or sliding between the layers which abrades the catalyst coating. With such an arrangement, it is difficult to maintain the integrity of the metal substrate without some form of mechanical strengthening or bonding together of the layers. Then there remains another major problem of allowing design flexibility in the overall shape of the cross-section of the honeycomb substrate so as to meet various exhaust space allocations in motor vehicles whilst maintaining a curved profile for housing strength reasons. This is particularly important in meeting certain vehicle underflow space requirements where a low profile cross-section of, for example, an oval shape is preferred instead of a circular shape which requires a larger height for the same cross-sectional area. Moreover, there is the difficulty and expense of manufacture involved in completely forming a metal honeycomb substrate so as to be suitable for a final step of applying a catalyst coating thereto. For example, a whisker-covered metal foil has been developed that is ideally suited to retain a catalyst coating as disclosed in U.S. Patents 4,318,828 and 4,331,631 assigned to the assignee of the present invention. However, the whiskers on such foil are metal oxide growths and, as a result, form both a metallurgical and mechanical barrier preventing intimate contact between the base metal of adjacent layers of the foil, and thus the strong fusion welding of the edges of adjacent layers of such foil which is normally necessary to form a suitable honeycomb substrate for the catalyst is thereby prevented by the presence of said metal oxide growths.

### Summary of the Invention

The present invention solves such problems and is a substantial departure from the conventional method of winding foil to form the substrate. It is an improvement in the substrate assembly disclosed in EP-A-0 117 602.

According to the present invention, a catalytic converter substrate is formed of folded foil strips prevented from lengthwise movement relative to one another by retaining means engaging opposite ends of the folds of said strips, the substrate being formed from two plain foil strips and one corrugated foil strip arranged and folded together so that each plain foil strip is formed into a folded structure comprising a series of juxtaposed rectangular units, each having a substantially U-shaped cross-section, the folded structures formed from the two plain strips are interleaved with one another, and the corrugated strip is folded backwards and forwards alternately to lie between and to separate the interleaved folded structures from one another, so as to define passages between the corrugated strip and the plain strips.

The thus folded foil strip substrate is retained by a sheet metal retainer preferably comprising a pair of identical shells which conjointly exactly conform about their interior to the desired substrate cross-sectional profile whereas the free folded height of the thus combined strips is made oversize. A substantial compressive load is thus applied to the folded strips crosswise thereof by a clamping action of the retainer shells when they are forced together and affixed along abutting longitudinal edges by welding. With such joining of the retainer shells, the folded strips are thereafter positively held in the desired cross-sectional profile and are also frictionally held together against relative longitudinal movement by the thus retained compressive load. Moreover, the retainer shells are provided at either end with an inwardly projecting flange at and about said end which acts as said retainer means and extends over the ends of the folds to positively prevent any longitudinal movement between the foil strips and the retainer. Thus, it will be appreciated that the above novel arrangement permits use of the afore-mentioned whisker-covered foil without requiring welding together of the foil layers and the resulting whisker-covered metal substrate retained within the retainer shells need only be coated with a suitable catalyst as a final step before being mounted in a suitable converter housing or otherwise adapted for use.

These and other objects, advantages and features of the present invention will become more apparent from the following description and drawings in which:

Description of the Drawings

Figure 1 is a perspective view with the top housing shell exploded away of a catalytic converter constructed according to the present invention.

Figure 2 is an enlarged cross-sectional view and with parts broken away of the converter shown in Figure 1.

Figure 3 is an enlarged view of a longitudinal edge construction of a substrate container shown in Figure 2.

Figure 4 is an enlarged end view of a portion of a foil substrate of the converter shown in Figures 1 and 2, showing the folding of foil strips in the construction of the foil strip substrate in the converter in Figure 1.

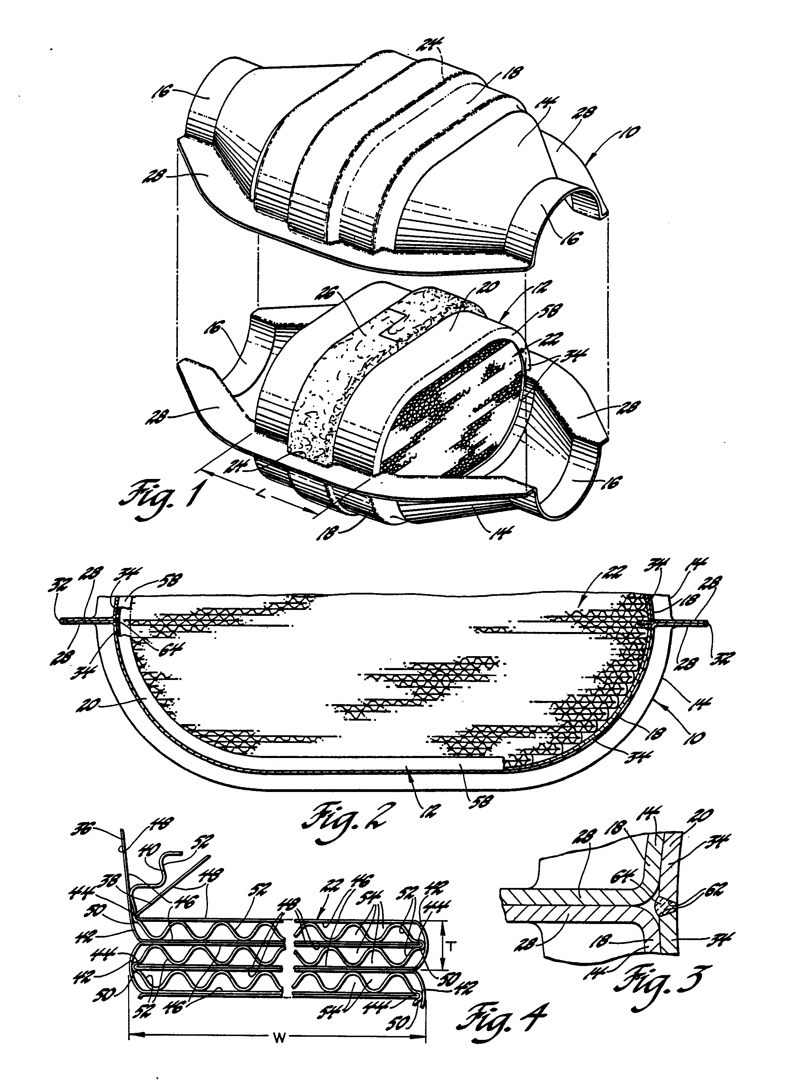

Referring to the drawings, there is shown a catalytic converter constructed according to the present invention and intended for use in eliminating the undesirable constituents in internal combustion engine exhaust gases. The catalytic converter is particularly adapted with a low profile cross-section of oval shape for underfloor installation in an automobile exhaust system and generally comprises a housing 10 enclosing a retainer and substrate assembly 12 as seen in Figures 1 and 2. The housing 10 comprises a pair of identical sheet metal shells 14 having semi-cylindrical end sections 16 and an intermediately located semi-oval section 18. The semi-oval sections 18 of the housing shells 14 conjointly conform to the periphery of a retainer 20 of assembly 12 so as to receive same in direct contact whilst the semi-cylindrical end sections 16 co-operate with one another to define cylindrical inlet and outlet openings at opposite ends of a substrate 22 of assembly 12, thus adapting the converter for connection in an exhaust pipe system of an engine (not shown). In addition, the housing shells 14 are formed midway of their oval section 18 with an internal semi-annular groove 24 which is adapted to receive a split ring seal 26 extending about the middle of the retainer. The seal 26 is made of resilient heat-expandable intumescent material such as that supplied under the tradename Interam by Technical Ceramics Products Division, 3M Company. The housing shells 14 are formed along their edge on each side with an outwardly projecting flange 28 extending from one end to the other so that when the housing shells are forced together about the retainer and substrate assembly 12, these flanges mate and then may be sealingly secured to one another to complete the converter assembly. For purposes of processing, the mating flanges 28 are initially held together by a plurality of spot welds whereafter they are permanently fixed and sealed along their entire length by an edge weld 32.

The retainer 20 comprises a pair of identical sheet metal shells 34 while the substrate 22 which is retained thereby, as disclosed in more detail later, is constructed of three folded foil strips 36, 38 and 40 as best seen in Figure 4.

Preferably, the foil used in the construction of the strips 36, 38 and 40 is whisker-covered metal foil which has been found to be ideally suited to retain a catalyst coating as disclosed in the afore-mentioned U.S. Patents 4,318,828 and 4,331,631 assigned to the assignee of the present invention and which are hereby incorporated by reference.

The two strips 36 and 38 are formed from plain foil, whereas the third strip 40 is a corrugated foil strip. Each plain strip 36,38 is folded backwards and forwards alternately along its length about alternate folds 42 and 44 to produce a folded structure in the form of a series of juxtaposed rectangular units, each having a substantially U-shaped cross-section with inner surfaces 46 facing one another and outer surfaces 48 in contact with one another, and each rectangular unit having a length L, a width W and a thickness T. The two folded structures produced by folding plain strips 36 and 38 in this manner are interleaved with one another as shown in Figure 4, whilst the corrugated strip 40 is folded backwards and forwards alternately along its length about folds 50, each of which folds 50 is formed about and clamps a fold 44 in one or the other of strips 36 and 38 so that the corrugations of corrugated strip 40 lie between the respective inner faces 46 of strips 36 and 38 so as to define passages 54 therebetween. The consequent three strip substrate 22 thus produced is illustrated in cross-section in Figure 4, and it will be appreciated that such a substrate structure is formed by bending and shaping the three foil strips 36,38 and 40 together in order to form the cross-sectional configuration shown in Figure 4.

All three of the strips 36,38 and 40 are adapted to be retained together against relative longitudinal movement by the opposite ends of all of their folds engaging with inwardly projecting flanges 58 formed on the opposite ends of the retainer shells 34. Furthermore, it will be seen that the corrugated foil strip 40 winds back and forth between the spaced sides 46 of the folded structures formed from both the smooth foil strips 36 and 38 and is thus fully enveloped thereby.

Moreover, the strips are foldable so as to produce an overall substrate structure that conforms to a prescribed cross-sectional profile such as the oval shape shown which, because of its low profile, is highly suitable for underfloor vehicle use.

To this end, the resulting combined three-strip substrate has units with a uniform thickness (T) and length (L) but various widths (W) so as to conform to the desired oval outline or profile. The two retainer shells 34 provided for the substrate structure thus formed exactly conform about their interior to the desired substrate cross-sectional profile whereas the free, unloaded stack height of the folded strips forming the substrate is made oversize so that a predetermined compressive load is applied to the folded strips crosswise thereof by a clamping action of the retainer shells 34 when they are forced to engage each other on opposite sides along mating longitudinal edges 62 which then are permanently joined by seam welds 64 as seen in Figure 3. With such joining of the retainer shells 34, the folded strips 36, 38 and 40 are thereafter positively retained by the retainer 20 in the desired oval shape. Moreover, the folded strips 36, 38 and 40 are frictionally held together against telescoping by the thus retained compressive load and also in a positive mechanical way by the retainer flanges 58 engaging the opposite ends of all of the folds 42, 44 and 50. And thus there is no need for any form of mechanical fastening or bonding together of the metal foil substrate layers such as by staples and welding.

Thus, it will be appreciated that the retainer and substrate assembly using the whisker-covered foil may be completely assembled and thereafter needs only to be coated with a suitable catalyst as a final step before being mounted in the converter housing. Moreover, while in the preferred construction shown the retainer and substrate assembly 12 serves as a sub-assembly or insert that mounts in a clam shell type housing, it is also contemplated that the retainer 20 itself could serve as the converter housing with suitable inlet and outlet sections then secured to the opposite ends thereof so as to adapt the retainer and substrate assembly 12 for installation in an exhaust system. Furthermore, it will be appreciated while the catalytic converter shown has an oval cross-sectional profile, the present invention readily lends itself to the formation of other cross-sectional forms having a curved profile. For example, by simply varying the width (W) of the individual units of the substrate, it can be seen that a substrate having an irregular as well as a circular cross-sectional profile can be readily constructed.

Thus, in summary, the present invention is a substrate assembly manufactured from a combination of two plain sheets of foil and a corrugated sheet of foil in such a way that the foil sheets are positively retained together against any relative longitudinal movement once the substrate assembly is placed within the sheet metal retainer, without the need to initially form the substrate assembly as a series of discrete sub-units. This means that the manufacture of such a substrate assembly according to the present invention in a variety of overall cross-sectional shapes is much simplified, since there is no need to build up the substrate assembly from a plurality of folded sub-units.

**Claims**

1. A catalytic converter substrate (22) formed of folded foil strips prevented from lengthwise movement relative to one another by retaining means (58) engaging opposite ends of the folds (42,44,50) of said strips, characterised in that the substrate (22) is formed from two plain foil strips (36,38) and one corrugated foil strip (40) arranged and folded together so that each plain foil strip (36,38) is formed into a folded structure comprising a series of juxtaposed rectangular units, each having a substantially U-shaped cross-section, the folded structures formed from the two plain strips (36,38) are interleaved with one another, and the corrugated strip (40) is folded backwards and forwards alternately to lie between and to separate the interleaved folded structures from one another, so as to define passages (54) between the corrugated strip (40) and the plain strips (36,38).

2. A catalytic converter substrate according to claim 1, characterised in that each fold (50) of the corrugated strip (40) is formed about and clamps a fold (44) between juxtaposed sides of a respective unit of a respective folded plain foil (36,38).

3. A catalytic converter substrate according to claim 1 or 2, characterised in that the width (W) of each rectangular unit in each folded structure, as seen in cross-section, differs in size from the adjacent rectangular unit, the extent of this difference in size being determined by a desired cross-sectional profile for the substrate (22).

Fig. 1

Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 341 868 (SÜDDEUTSCHE KÜHLERFABRIK) <br> * Page 7, line 18 - page 8, line 1; page 8, line 34 - page 9, line 19; figures 5,6 * | 1-3 | F 01 N .3/28 |
| | --- | | |
| D,A | EP-A-0 117 602 (G.M.C.) <br> * Page 6, lines 8-21; page 7, lines 8-32; figures 5,8-11 * | 1-3 | |
| | ----- | | |

**TECHNICAL FIELDS SEARCHED (Int. Cl.4)**

F 01 N
B 01 J
B 21 D

The present search report has been drawn up for all claims

| Place of search | Date of completion of the search | Examiner |
|---|---|---|
| THE HAGUE | 12-12-1986 | HAKHVERDI M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82